## Europäisches Patentamt
## European Patent Office
## Office européen des brevets

(19)

(11) Veröffentlichungsnummer: **0 137 154**
**B1**

(12) **EUROPÄISCHE PATENTSCHRIFT**

(45) Veröffentlichungstag der Patentschrift:
29.04.87

(51) Int. Cl.⁴: **F 16 K 27/06,** F 16 K 11/087

(21) Anmeldenummer: **84108407.2**

(22) Anmeldetag: **17.07.84**

(54) **Mehrwege-Hahn.**

(30) Priorität: **09.08.83  CH 4315/83**

(43) Veröffentlichungstag der Anmeldung:
**17.04.85 Patentblatt 85/16**

(45) Bekanntmachung des Hinweises auf die Patenterteilung:
**29.04.87 Patentblatt 87/18**

(84) Benannte Vertragsstaaten:
**DE FR GB IT NL**

(56) Entgegenhaltungen:
**US-A-4 232 709**

(73) Patentinhaber: **GEORG FISCHER AKTIENGESELLSCHAFT, Mühlentalstrasse 105, CH- 8201 Schaffhausen (CH)**

(72) Erfinder: **Kunz, Peter, Breitenaustrasse 156, CH- 8200 Schaffhausen (CH)**

LIBER. STOCKHOLM 1987

## Beschreibung

Die Erfindung betrifft einen Mehrwege-Hahn, wie er im Oberbegriff von Anspruch 1 gekennzeichnet ist.

Mehrwege-Hähne mit drei T-förmig angeordneten Rohranschlüssen müssen für unterschiedliche Leitungsverlegung und Bedienungsrichtung unterschiedlich ausgebildet sein. Wird z.B. ein Hahn in einem horizontalen Leitungsstrang mit einer senkrecht nach unten dazu verlaufenden dritten Leitung eingebaut, kann es erforderlich sein, dass die Betätigungsvorrichtung - meist ein Handgriff - von vorn oder von oben bedienbar sein muss, was jeweils einen anders ausgebildeten Mehrweg-Hahn erfordert. Bei einer zu den Rohranschlüssen wahlweisen unterschiedlichen Anordnung der Betätigungsvorrichtung sind jedoch bei den bekannten Ausführungen mindestens unterschiedliche Gehäuse erforderlich, was hohe Formkosten bei den im Spritzgussverfahren hergestellten Gehäusen und eine aufwendige Lagerhaltung für die unterschiedlichen Teile erfordert.

Durch die US-A-4 232 709 ist ein Mehrwege-Hahn der eingangs genannten Art bekannt geworden, welcher zwar zwei sich gegenüberliegende Betätigungsvorrichtungen aufweist, wobei jedoch dieser Mehrwege-Hahn nicht für die vorgängig genannten unterschiedlichen Einbaumöglichkeiten in Leitungssträngen verwendbar ist.

Aufgabe der vorliegenden Erfindung ist die Schaffung von Mehrweg-Hähnen der eingangs genannten Art, welche aus den gleichen Formteilen bestehend mit jeweils einer unterschiedlichen Anordnung der Betätigungsvorrichtung für eine Betätigung von vorn oder von oben bzw. von unten bei unterschiedlichen Montagearten einsetzbar sind.

Erfindungsgemäss wird dies durch die im kennzeichnenden Teil von Anspruch 1 angeführten Merkmale gelöst.

Besonders vorteilhafte Weiterbildungen der Merkmale sind in den abhängigen Ansprüchen gekennzeichnet.

Durch die erfindungsgemässe Anordnung von zwei um 90° zueinander versetzt angeordneten Lageraugen am Gehäuse kann die Betätigungsvorrichtung jeweils im Leitungsstrang so angeordnet werden, wie sie für die Bedienung bzw. die Platzverhältnisse am günstigsten ist. Hierbei ist der Mehrwege-Hahn immer aus den gleichen Formteilen für das Gehäuse und das Kugelküken montierbar.

Die Erfindung ist beispielsweise in den Zeichnungen dargestellt und nachfolgend beschrieben.

Es zeigen:

Fig. 1 eine Ansicht eines Mehrwege-Hahnes mit einer ersten Anordnungsvariante der Betätigungsvorrichtung,

Fig. 2 einen Schnitt entlang der Linie II - II von Fig. 1,

Fig. 3 eine Ansicht entsprechend Fig. 1 mit einer zweiten Anordnungsvariante der Betätigungsvorrichtung und

Fig. 4 einen Schnitt entsprechend Fig. 2 nur vom für beide Varianten verwendbaren Gehäuse.

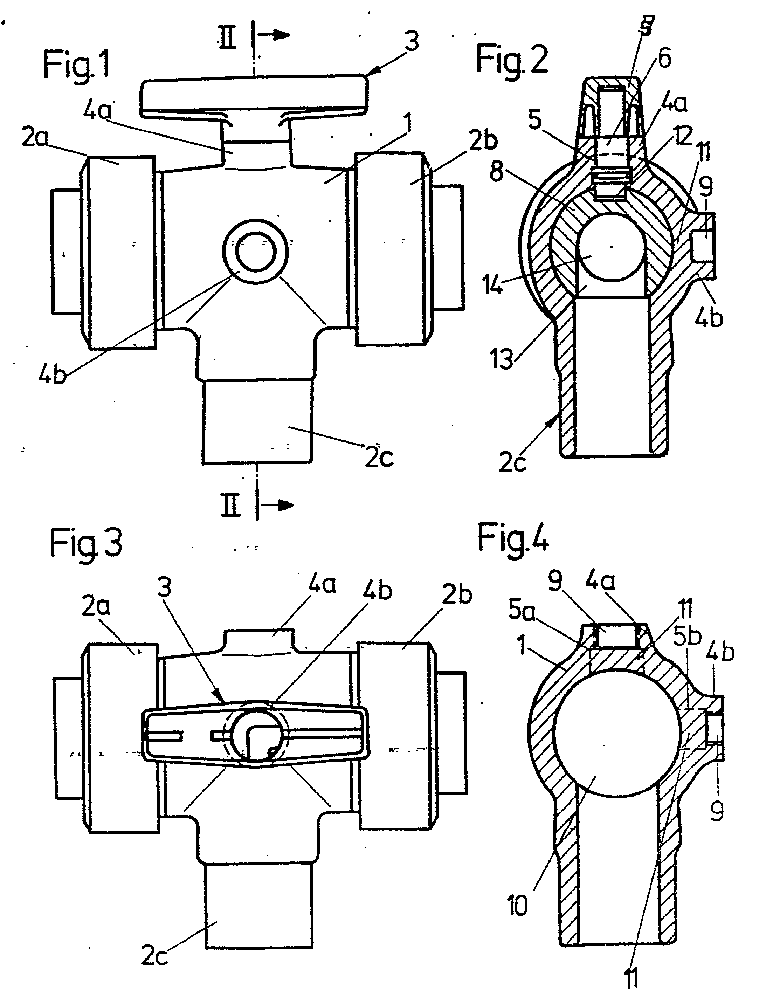

Fig. 1 und 2 zeigt einen Dreiweg-Kugelhahn mit drei T-förmig an einem Hahn-Gehäuse 1 angeordneten Rohranschlüssen 2a, 2b, 2c.

Auf der dem mittleren Rohranschluss 2c diametral gegenüberliegenden Seite des Gehäuses 1 ist eine als Handbedienungselement ausgebildete Betätigungsvorrichtung 3 angeordnet, für deren Lagerung ein am Gehäuse 1 angeordnetes Lagerauge 4a vorgesehen ist. Die Betätigungsvorrichtung 3 weist eine in einer Bohrung 5 des Lagerauges 4a drehbar gelagerte Welle 6 auf, deren ein Ende drehfest mit einem Kugelküken 8 in Eingriff steht und am anderen Ende ein Handgriff 7 befestigt ist, wodurch das Kugelküken 8 über die Welle 6 mit dem Handgriff 7 betätigbar ist.

Am Gehäuse 1 ist ein zweites Lagerauge 4b in der gleichen Querschnittsebene um 90° zum ersten versetzt angeordnet. Dies ermöglicht den Zusammenbau einer zweiten Ausführungsvariante des Mehrweg-Hahnes mit den gleichen Einzelteilen wobei hier wie aus Fig. 3 ersichtlich die Betätigungsvorrichtung 3 um 90° zum mittleren Rohranschluss 2c versetzt angeordnet ist.

Fig. 4 zeigt einen Querschnitt nur durch das Gehäuse 1, woraus ersichtlich ist, dass bei dem als Formteil ausgebildeten Gehäuse die beiden Lageraugen 4a und 4b angeformt sind. Diese Lageraugen 4a, 4b weisen Ausnehmungen 9 auf, welche mit einer zum Innenraum 10 abschliessenden und dichtenden Wandung 11 versehen sind. Vor der Montage werden entweder am Lagerauge 4a oder am Lagerauge 4b je nach Anordnung der Betätigungsvorrichtung 3 entsprechende Fig. 1 oder Fig. 3 die Bohrungen 5a oder 5b angebracht.

Das Gehäuse 1 ist vorzugsweise aus Kunststoff - wie z.B. Polyvinylchlorid - im Spritzgussverfahren hergestellt, wobei dann die Bohrung 5a oder 5b durch mechanische Bearbeitung hergestellt wird.

Das Kugelküken 8 ist ebenfalls im Spritzgussverfahren aus Kunststoff hergestellt, wobei dessen Formteil eine Ausnehmung 12 für den Eingriff des abgeflachten Teiles der Welle 6 und ein Sackloch 13 aufweist.

Vor der Montage werden je nach Anordnung der Betätigungseinrichtung und der Absperr- bzw. Durchgangsrichtungen für das Medium quer zum Sackloch 13 laufende Bohrungen 14 angebracht, wobei das Sackloch 13 und die Bohrung 14 den Durchflusskanal für das Medium bilden. Dadurch ist für die verschiedenen Ausführungsvarianten ebenfalls nur ein Formteil bzw. eine Spritzgussform erforderlich.

Durch die beschriebene Ausbildung des Gehäuses mit zwei Lageraugen und des Kugelkükens als Formteil mit der Möglichkeit zur nachträglichen Bohrung des Durchflusskanals in der für jede Montagevariante erforderlichen Richtung sind verschiedene Ausführungsvarianten des Mehrweg-Hahnes aus jeweils den gleichen Teilen bzw. Formteilen montierbar, wodurch Formkosten für die Spritzgussteile eingespart werden können und die Lagerhaltung von Teilen wesentlich verringert werden kann.

**Patentansprüche**

1. Mehrwege-Hahn mit einer Betätigungsvorrichtung (3) für ein Kugelküken (8) und mit einer T-förmigen Anordnung von drei Rohranschlüssen (2a, 2b, 2c) am Hahngehäuse (1), wobei das Gehäuse (1) mindestens zwei daran angeordnete Lageraugen (4a, 4b) für jeweils eine unterschiedliche Anordnung der Betätigungsvorrichtung (3) aufweist, dadurch gekennzeichnet, dass ein Lagerauge (4a) fluchtend gegenüberliegend einem Rohranschluss (2c) und ein zweites Lagerauge (4b) um 90° dazu versetzt am Gehäuse (1) angeordnet sind und dass für das Kugelküken (8) ein Formteil verwendet wird, das für die unterschiedlichen Anordnungen der Betätigungsvorrichtung (3) ausgebildet ist.

2. Mehrwege-Hahn nach Anspruch 1, dadurch gekennzeichnet, dass beide Lageraugen (4a, 4b) beim Formrohteil des Gehäuses (1) eine Ausnehmung (9) mit einer zum Innenraum (10) des Gehäuses (1) abschliessenden und dichtenden Wandung (11) ausgebildet sind und dass beim fertigen Gehäuse (1) je nach Anordnung der Betätigungsvorrichtung (3) eines der beiden Lageraugen (4a oder 4b) zur Lagerung einer Welle (6) mit einer durchgehenden Bohrung (5) versehen ist.

3. Mehrwege-Hahn nach einem der Ansprüche 1 oder 2, dadurch gekennzeichnet, dass mindestens das Gehäuse (1) aus Kunststoff bestehend als Spritzgussteil ausgebildet ist.

4. Mehrwege-Hahn nach einem der Ansprüche 1 bis 3, dadurch gekennzeichnet, dass das Formteil für das Kugelküken (8) als Spritzgussteil und aus Kunststoff bestehend ausgebildet ist und dass zur Herstellung des fertigen Kugelkükens (8) je nach Ausführungsvariante des Mehrwege-Hahnes mindestens eine Bohrung (14) nachträglich anbringbar ist.

**Claims**

1. Multiway cock with an actuating mechanism (3) for a ball plug (8) and with a T-shaped arrangement of three pipe connections (2a, 2b, 2c) on the cock housing (1), the latter having at least two bearing journals (4a, 4b) thereon for in each case a different arrangement of the actuating mechanism (3), characterized in that one bearing journal (4a) faces a pipe connection (2c) in aligned manner and a second bearing journal (4b) is arranged on the housing (1) displaced by 90° thereto and that a moulded part is used for the ball plug (8) and is constructed for the different arrangements of the actuating mechanism (3).

2. Multiway cock according to claim 1, characterized in that both bearing journals (4a, 4b) at the moulding blank of the housing (1) have a recess (9) with a closing and sealing wall (11) towards the inner area (10) of the housing (1) and that in the finished housing (1), as a function of the arrangement of the actuating mechanism (3), one of the two bearing journals (4a or 4b) is provided with a through bore (5) for mounting a shaft (6).

3. Multiway cock according to one of the claims 1 or 2, characterized in that at least the housing (1) is constructed from an injection moulded plastic part.

4. Multiway cock according to one of the claims 1 to 3, characterized in that the moulded part for the ball plug (8) is constructed as an injection moulded plastic part and that for producing the finished ball plug (8) at least one bore (14) can be subsequently provided, as a function of the construction variant of the multiway cock.

**Revendications**

1. Robinet à plusieurs voies, comportant un dispositif d'actionnement (3) pour actionner une noix sphérique (8), et un corps (1) sur lequel trois raccords tubulaires (2a, 2b, 2c) sont disposés en T, ce corps (1) présentant au moins deux bossages (4a, 4b) qui y sont aménagés, chacun pour un agencement différent du dispositif d'actionnement (3), caractérisé en ce qu'un bossage (4a) est agencé sur le corps (1) en vis-à-vis d'un raccord tubulaire (2c) et en étant aligné sur celui-ci, et un deuxième bossage (4b) est agencé sur le corps (1), à 90° du premier bossage et en ce que la noix sphérique (8) est une pièce profilée conçue pour les différents agencements du dispositif d'actionnement (3).

2. Robinet à plusieurs voies selon revendication 1, caractérisé en ce que sur le corps (1) à l'état de pièce brute, les deux bossages (4a, 4b) comportent chacun un évidement borgne (9) séparé du volume intérieur (10) du corps (1) par une paroi étanche (11), et en ce que sur le corps (1) fini, l'un des deux bossages (4a ou 4b), selon l'agencement du dispositif d'actionnement (3), est muni d'un trou traversant (5) pour le montage d'un arbre (6)

3. Robinet à plusieurs voies selon l'une quelconque des revendications 1 ou 2, caractérisé en ce qu'au moins le corps (1) est en matière plastique réalisé en tant que pièce moulée par injection.

4. Robinet à plusieurs vois selon l'une quelconque des revendications 1 à 3, caractérisé en ce que la pièce profilée pour la noix sphérique (8) est réalisée en tant que pièce moulée par injection, en matière plastique, et en ce que, pour réaliser la noix sphérique finie (8), au moins un trou (14) est aménagé ensuite en fonction de la variante de réalisation du robinet à plusieurs voies.

0 137 154

Fig.1

Fig.2

Fig.3

Fig.4